# EUROPEAN PATENT APPLICATION

(11) **EP 1 734 764 A1**
(43) Date of publication of application: **20.12.2006**
(21) Application number: 05105234.8
(22) Date of filing: 15.06.2005
(51) Int. Cl.: H04N 7/18, H04N 7/16

(54) **Security Device of Electronic Surveillance**

(71) Applicant: Polaris Wireless system Corp., Jhongjheng District, Taipei City 100 (TW)
(72) Inventor: Lin, Ping-Lih, Tainan Country 725 (TW); Jeng, Cherng-Huei, Shilin District Taipei City 111 (TW)
(74) Representative: Hengelhaupt, Jürgen

(57) **Abstract**

The invention discloses a security device of electronic surveillance. The security device of electronic surveillance comprises a plurality of video cameras, A/D converters, a video motion detector module, a system controller, a video composing module, subtitle module, and a video signal mixer. The A/D converters are used to convert a TV signal or analog video signals captured by the video cameras into immediate digital video signals and the digital video signals are provisionally stored in a video buffering memory. Then, the video motion detector module instantly computes motion parameters of the digital video signals stored in the video buffering memory with a built-in algorithm and transmits the motion parameters to the system controller. According to the motion parameters, the system controller issues appropriate control instructions to the video composing module and the subtitle module. The video composing module outputs a dynamic composed video (e.g.: PIP or POP) and the subtitle module produces appropriate message, in response to the control instructions. The video signal mixer mixes the composed video and the messages to output a mixed digital video signal. Finally, a D/A converter is used to convert the mixed digital video signal into analog signals to display on TV set with PIP mode or POP mode.

## Description

### BACKGROUND OF THE INVENTION

### 1. Field of the Invention

This invention relates to a security device of electronic surveillance, and more particularly that the device combines the detection of a real-time video motion in multi-area and PIP /POP function to satisfy user's demand for home surveillance and watching TV simultaneously.

### 2. Description of the Prior Art

For providing people's security in public place, building, office, or home, surveillance systems are installed at these places in conventional arts. The surveillance system is composed with several video cameras, transmission lines, video processing unit and monitors. The video cameras are arranged at different places respectively, and transmit video signals captured to a video processing unit via transmission lines. The video processing unit is usually centralized in a supervisory control center. After the expected video processing procedure conducted by the video unit, the desired video derived from the video captured by cameras are displayed on the monitors so as to enable user to monitor the real-time condition of the environment entirely.

However, the two important features that will affect the usability of the surveillance system are (a) how the system can continuously show the captured video in a proper way and (b) the cost. If the survelleinance system can't intelligently alert the user whenever an unusual video detected, then the continuously display of video is less significant. As the cost issue, the additional monitors installed results in the additional cost, for example, cost, power consumption, and space arrangement, etc. Usually, the monitor is only for surveillance purpose and can't display any TV program.

Accordingly, the conventional surveillance systems have these drawbacks mentioned above, and still have to be improved.

### SUMMARY OF THE INVENTION

The security device of electronic surveillance of the present invention comprises a plurality of video cameras, A/D converters, a video buffering memory, a video motion detector module, a video composing module, a subtitle module, a video signal mixer, a D/A converter, and a system controller. One of the video inputs is dedicated to receive a TV signal and the others are for connecting video cameras for surveillance purpose. The A/D converters are used to convert analog video TV signal or signals captured by the video cameras into immediate digital video signals. Then, provisionally, the digital video signals are stored in a video buffering memory for further processing. The video motion detector module instantly computes image motion parameters of the digital video signals stored in the video buffering memory with a built-in algorithm and transmits the motion parameters to the system controller. According to the motion parameters, the system controller will issue appropriate control instructions to the video composing module and the subtitle module to produce the desired live video display which composes of multiple live video contents and/or text on screen display (OSD) in a predetermined way. The main characteristic of the video composing module is to properly compose the connecting video in a real-time manner and outputs a dynamic composing video (e.g.: PIP or POP) to the next stage. The subtitle module is designed primary to generate appropriate text or graphic pattern which is used to provide user with system information on the display screen, such as camera's title, date, time, system operation condition, warming message, etc. In the final stage, the video signal mixer mixes the outputs of video composing module and the subtitle module. Finally, the D/A converter convert the mixed digital video signal into analog signals for displaying video on TV set. By using the security device mentioned above, the user can have the home/office surveillance functionality additionally and keep watching TV program or enjoying the DVD video on TV as usual. Whenever some unusual events detected by the device, the associated live videos will be instantly shown or overlapped on the image of the TV program or DVD video. The original TV program or DVD video will continue to display when the motion detection signal is gone.

### BRIEF DESCRIPTION OF THE DRAWINGS

FIG. 1 is the function block of a security device of electronic surveillance of the present invention; and
FIG. 2A and 2B is an application diagram of the security device of electronic surveillance of the present invention.

### DESCRIPTION OF THE PREFERRED EMBODIMENT

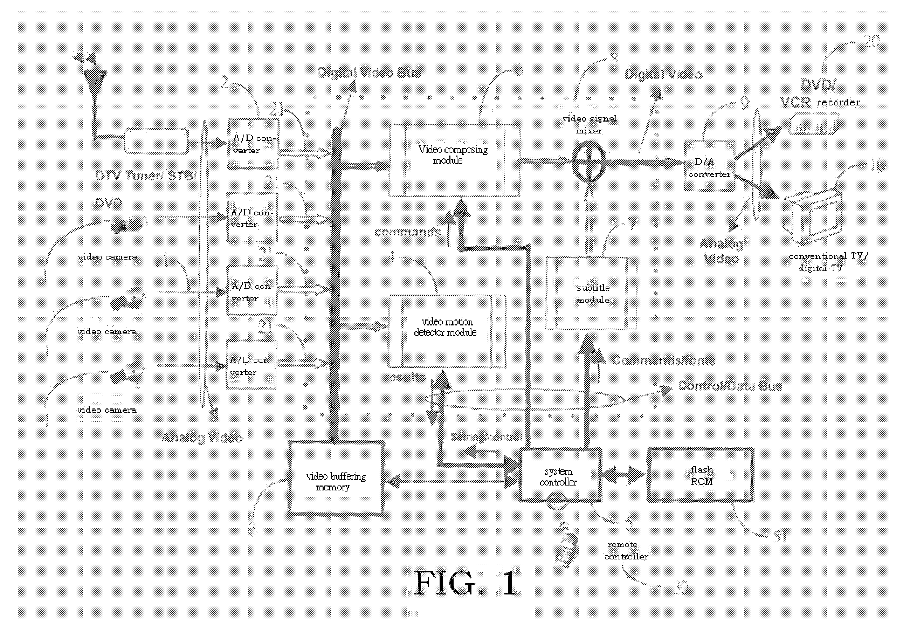

Referring to FIG. 1, it is a security device of electronic surveillance of the present invention. The security device of electronic surveillance comprises a plurality of video cameras 1, a plurality of A/D converters 2, a video buffering memory 4, a video motion detector module 4, a system controller (MCU) 5, a video composing module 6, a subtitle module 7, and a video signal mixer 8.

The plurality of video cameras 1 is respectively arranged in different zones to capture video and generate analog video signals 11. Each video camera 1 can set with a plurality of motion detection zones and sensitivity parameters corresponding to the motion detection zones in accordance with a practice environment.

The A/D converters 2 are connected to a TV signal input and the plurality of video cameras to receive the analog video TV signal and signals 11. The A/D converters 2 are used to convert the analog video TV signal or signals 11 of the video cameras 1 into digital video signals 21 and the digital video signals 21 are stored in the video buffering memory 3.

The video buffering memory 3 is connected to the A/D converters 2 to provisionally store the digital video signals 21 converted by the A/D converter 2 for further processing.

The video motion detector module 4 connected to the video buffering memory 3 and the system controller 5. The video motion detector module 4 is a digital video signal processing unit with a built-in algorithm to implement operation of motion detection for local or complete images of the video signals of video cameras 1. The video motion detector module 4 accesses the digital video signals 21 stored in the video buffering memory 3, instantly computes and obtains image motion parameters, and transmits the motion parameters to the system controller 5.

The system controller (MCU) 5, a control center, mainly receives the motion parameters computed by the video motion detector module 4. According to the video motion parameters the system controller 5 issues appropriate control instructions and transmits the control instructions to the video composing module 6 and the subtitle module 7 to produce the desired live video display which composes of multiple live video contents and/or text on screen display (OSD) in a predetermined way.

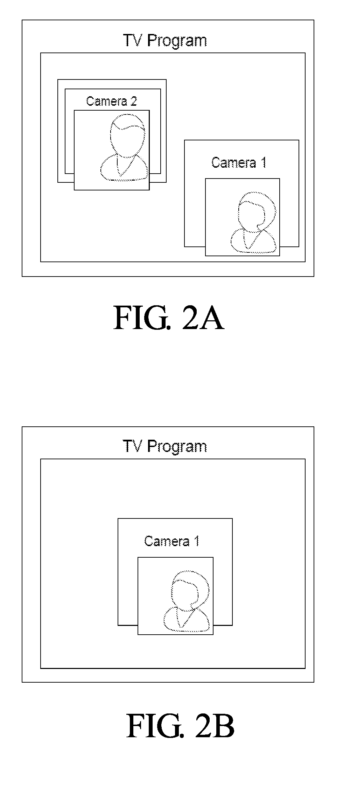

The main characteristic of video composing module 6 is to properly compose the connecting video in a real-time manner and outputs a dynamic composing video with single window mode, PIP (picture-in-picture) mode, or POP (picture-out-of-picture, e.g.: 2x2 windows) mode to a multi-channel connected therewith according to the control instruction. Basically, the video motion detector module 4 and the video composing module 6 operate in synchrony, but they both operate independently when the user cancels the function of automatic video motion detection. The system controller 5 controls the video composing module 6 to output the video signal of original TV program or DVD video when the motion detection signal continuing for a short period of time is gone. In other words, the motion image is instantly overlapped on the image of the TV program or DVD video when detecting an unusual motion through combining the function of video motion detector module 4 of the video cameras 1 and the video composing module 6. Therefore, if the user is watching TV program or enjoying DVD video on TV monitor, the image of motion video is instantly overlapped on the image of the TV program or DVD video when detecting an unusual motion, and the original TV program or DVD video will continue to display on TV when the unusual motion is gone, as shown in FIG.2A and FIG. 2B.

The subtitle module 7 is primary to generate message of text (e.g.: Chinese subtitles and English subtitles) or graphic pattern which is used to provide user system information on the display screen. The subtitle module 7 receives the control instruction from the system controller 5 to output an appropriate information (e.g.: camera's title, date, time, system operation condition, warming message, etc.) to overlap on the composing video. Therefore, the user can instantly know the source and occurring time of video signal, or record with adequate messages for evidence. The subtitle 7 have a great performance close to that of the video composing module 6, so the image of video of the video cameras 1 and position/size of PIP can be displayed instantly and dynamically.

The video signal mixer 8 mixes the outputs of the video composing module 6 and the subtitle module 8. The mixed video is the final digital video signal 81, and the user can directly apply the digital video signal 81 for demand. The digital video signal 81 is also converted by D/A converter 9 into video signal standards, such as NTSC/PAL/SECAM, and the user can directly display it by conventional TV/digital TV 10, or record the video signal of the video cameras 1 by DVD/VCR recorder 20.

In order to satisfy the dual function request of TV entertainment and home surveillance, the present invention has a design PIP control process with a wireless receiver that is simple and easy to control. The user can carry out the control process through a remote controller 30. For example, the user can fast move the position of the image and gradationally adjust the dimension of the image with the remote controller 30 as user's hope to avoid the image of the captured video overlapping the important portion of the image of the TV video. Furthermore, the user can exchange the images of PIP and zoom in the image of the video cameras so as to not loss any important information. The user can watch TV program or enjoy DVD video as usual by turning off the function of image motion detection through the remote controller 30. The control program for the process mentioned above is stored in the Flash ROM 51 of the system controller 5.

## Claims

1. A security device of electronic surveillance, comprising:
at least one video camera capturing motion image and generating analog video signals;
A/D converters connected to a video input and said video camera converting said analog video signals into digital video signals, and storing said digital video signals in a video buffering memory ;
a video motion detector module connected to said video buffering memory accessing said digital video signals stored in said video buffering memory, and instantly computing and obtaining motion parameters;
a system controller connected to said video motion detector module receiving said motion parameters and issuing a control instruction according to said motion parameters;
a video composing module outputting a composed video of said digital video signals with single window mode, PIP mode, or POP mode according to said control instruction;
a subtitle module receiving said control instruction from said system controller and producing messages to overlap on said composed video; and
a video signal mixer mixing said composed video from said video composing module and said messages from said subtitle module to output a mixed digital video signal.

2. The device according to claim 1, wherein said least one video camera is set with at least one motion detection zone and sensitivity parameters corresponding to said motion detection zones.

3. The device according to claim 1, wherein said video motion detector module has an algorithm to implement operation of motion detection for local or complete images of said digital video signals.

4. The device according to claim 1, wherein said video motion detector module and said video composing module operate in synchrony for displaying a original video with said digital video signals when detecting a motion image, and then displaying said original video alone when not detecting said motion image.

5. The device according to claim 1, wherein said subtitle module provides Chinese subtitles and English subtitles to show an indication for said composed video or to show an operation message.

6. The device according to claim 1, wherein said subtitle module provides messages comprising camera's title, date, and time.

7. The device according to claim 1, wherein said system controller comprises a Flash ROM.

8. The device according to claim 7, wherein said ROM stores a control program for remote control.
